# EUROPEAN PATENT APPLICATION

(11) **EP 1 666 429 A1**
(43) Date of publication of application: **07.06.2006**
(21) Application number: 04747135.4
(22) Date of filing: 07.07.2004
(51) Int. Cl.: C03C 25/00, G02B 6/00

(54) **OPTICAL FIBER PROCESSING SYSTEM AND METHOD**

(30) Priority: 08.07.2003 JP 2003271859
(71) Applicant: Shin-Etsu Chemical Co., Ltd., Chiyoda-ku, Tokyo 100-0004 (JP)
(72) Inventor: INOUE, Dai c/o Shin-Etsu Chemical Co., Ltd., Kashima-gun, Ibaraki 3140116 (JP); OTOSAKA, Tetsuya c/o Shin-Etsu Chemical Co., Ltd., Annaka-shi, Gunma 3790195 (JP)
(74) Representative: Pfenning, Meinig & Partner GbR
(86) International application number: PCT/JP2004/009666
(87) International publication number: WO 2005/003051

(57) **Abstract**

There is provide an optical fiber processing apparatus and a process method capable of shortening time required for replacing an atmosphere in a treatment container with inert gas and filling with heavy hydrogen and of restraining an amount used of expensive heavy hydrogen. An optical fiber processing apparatus includes a plurality of containers 1 for processing optical fiber that are spatially coupled by piping, each treatment container 1 including a treatment chamber that can be sealed and accommodate one or more bobbins 4 on which fiber to be processed is wound, in which the treatment chamber is supplied with treatment gas, and the optical fiber is processed by the gas. The treatment gas is heavy hydrogen or gas including the heavy hydrogen.

## Description

### BACKGROUND OF THE INVENTION

### Field of the Invention

The present application also relates to the following application, the contents of which are incorporated herein by reference if applicable.
A Japanese Patent Application No. 2003-271859
Filed on: July 8, 2003.

The present invention relates to a gas treatment of an optical fiber, and particularly relates to a gas treatment performed to improve a hydrogen-resistant characteristic of an optical fiber. More particularly, the present invention relates to an optical fiber processing apparatus and a process method performed by a gas including a heavy hydrogen.

### Description of Related Art

An optical fiber most used in optical transmission line is a single mode optical fiber having a zero dispersion wavelength near 1310 nm. Conventionally, this optical fiber has been used for the transmission of a signal light of 1310 nm. However, these days the optical fiber is used to transmit a signal light having other wavelengths due to the advance of a dispersion compensation technique.

In recent years, there has been developed a CWDM (Coarse Wavelength Division, Multiplexing) technique in order to comply with the increase of a transmission capacity to be requested at low cost. The transmission technique restrains the generation of crosstalk between each signal wavelength by broadening a wavelength interval to about 25 nm even if a cheap light source is used. In order to transmit much signal light using an optical fiber in the technique, it is desirable that a usable wavelength region is wide. However, in a conventional single mode optical fiber, there is an absorption loss peak (hereinafter, referred to as an OH peak) caused by an OH group in an optical fiber near 1383 nm. This wavelength region cannot be utilized. In order to use this region, a low-moisture optical fiber is developed, and is prescribed as an International Standard in ITU-T G652 table C.

Such an optical fiber initially requires a small OH peak and also requires a small OH peak after aging by hydrogen. For this reason, there is a method for processing an optical fiber in heavy hydrogen as one method improving a hydrogen-resistant characteristic of an optical fiber. This method is a method having a characteristic that heavy hydrogen D reacts to a defect in an optical fiber in the same way as that of hydrogen H and yet an OD group does not cause an absorption loss peak in a wavelength area used as signal light because the OD group is different from an OH group. See, for example, Patent Documents 1, 2, and 3.
[Patent Document 1] Japanese Patent Application publication No. 60-90852
[Patent Document 2] Japanese Patent Application Publication No. 7-277770
[Patent Document 3] Japanese Patent Application Publication No. 2000-148450

### SUMMARY OF THE INVENTION

### Problems to be solved by the Invention

A process of an optical fiber by heavy hydrogen as described above is performed for predetermined time in a state where an optical fiber is put in a container that can be sealed and the container is filled with heavy hydrogen to form an atmosphere containing heavy hydrogen. Since the heavy hydrogen is combustible gas similarly to hydrogen, the atmosphere in the container should be displaced with inert gas or the like such as nitrogen safely enough before filling with an atmosphere containing heavy hydrogen.

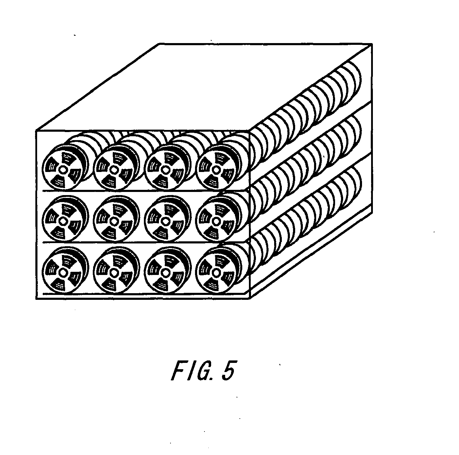

Conventionally, a treatment container has been grown in size to process a large quantity of optical fiber. However, when a container grows in size, it takes time to displace components in the container with inert gas and fill with an atmosphere containing heavy hydrogen. A conventional apparatus is shown in Fig. 5. This apparatus can process a large quantity of optical fiber at a time by arranging multiple bobbins, on which fiber to be processed is wound, on a plurality of shelves. However, although a small quantity of optical fiber is processed, there has been a problem that it requires the same amount of heavy hydrogen and time as an amount and time when a large quantity of optical fiber is processed.

In consideration of the problem, an object of the present invention is to provide an optical fiber processing apparatus and a process method capable of shortening time required for replacing an atmosphere in a treatment container with inert gas and filling with heavy hydrogen and of restraining an amount used of expensive heavy hydrogen.

### Means for Achieving the Objects

The optical fiber processing apparatus of the present invention includes a plurality of containers for processing optical fiber that are spatially coupled by piping, each treatment container including a treatment chamber that can be sealed and accommodate one or more bobbins on which fiber to be processed is wound, in which the treatment chamber is supplied with treatment gas, and the optical fiber is processed by the gas. The treatment gas may be heavy hydrogen or gas including heavy hydrogen.

In the optical fiber processing apparatus, the treatment container may arrange and accommodate the plurality of bobbins on a line in the axial direction in which the optical fiber is wound. Further, in the optical fiber processing apparatus, a cross section perpendicular to the direction in which the bobbins are arranged may have the substantially same magnitude as that of a cross section perpendicular to the direction in the bobbins, in the treatment chamber of the treatment container.

In the optical fiber processing apparatus, the treatment container may have a transparent window through which whether the bobbins are accommodated in the treatment chamber can be comprehended from the outside. Further, in the optical fiber processing apparatus, the window may lengthwise be arranged in the direction in which the bobbins in the treatment container are arranged.

The optical fiber processing apparatus may further include a detecting section that detects whether the bobbins are accommodated in the treatment chamber of the treatment container. Further, in the optical fiber processing apparatus, the detecting section may include a mass meter that measures mass of the treatment container.

The treatment container according to the present invention may have a tubelike door of which one end can be opened or closed, a cross sectional shape of the treatment container may have a circle or a shape similar to the circle, and the treatment chamber of the treatment container may include a slidable tray therein. The treatment containers may be connected to one another by piping to be exhausted by a vacuum pump, the optical fiber processing apparatus may further include valves that are provided in the piping for coupling the plurality of treatment containers, in which some of the plurality of treatment containers are freely disconnected from or connected to other treatment containers and an air supply and exhaust system by the valves, and the optical fiber processing apparatus may further include a system that controls and manages a gas process for the optical fiber in each treatment container in an integrated fashion.
In addition, a method for processing optical fiber according to the present invention uses the optical fiber processing apparatus.

The summary of the invention does not necessarily describe all necessary features of the present invention. The present invention may also be a sub-combination of the features described above.

### Effects of the Invention

According to an optical fiber processing apparatus and a process method of the present invention, it is possible to process a plurality of treatment containers under a gas atmosphere individually or in combination with one another using some containers, in concert with the number of bobbins on which fiber be processed is wound. Since time required for processing gas decreases and an amount used of heavy hydrogen decreases, a process cost is significantly reduced. Furthermore, it is possible to control and manage a gas process for optical fiber in each treatment container and thus reduce the required workforce.

### BRIEF DESCRIPTION OF THE DRAWINGS

Fig. 1 is an explanation diagram exemplary showing an optical fiber processing apparatus of the present invention in which a plurality of treatment containers is spatially coupled by piping.

Fig. 2 is a perspective view exemplary showing a bobbin on which fiber to be processed is wound.

Fig. 3 is a schematic perspective diagram showing a state that a tray carrying a plurality of bobbins is taken out and put in a treatment container.

Fig. 4 is a schematic perspective diagram showing an arrangement example of 15 treatment containers according to the present invention.

Fig. 5 is a schematic perspective diagram showing a conventional optical fiber processing apparatus.

### DETAILED DESCRIPTION OF THE INVENTION

The invention will now be described based on the preferred embodiments, which do not intend to limit the scope of the present invention, but exemplify the invention. All of the features and the combinations thereof described in the embodiment are not necessarily essential to the invention.

As a result of a repeated keen examination, the present invention can have a treatment container configuration suited to an amount of fiber to be processed using treatment containers individually or in combination with one another, by spatially coupling the plurality of independent treatment containers, which can respectively accommodate a few bobbins, by means of piping and disconnecting and connecting the containers from/to one another using the arrangement of valves. Hereinafter, it will specifically be described based on an embodiment.

### (Embodiment 1)

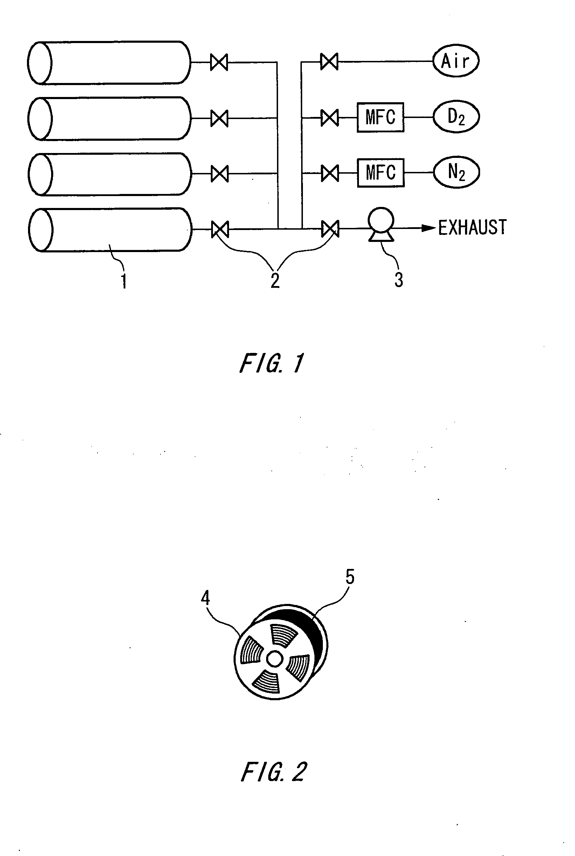

Fig. 1 shows an optical fiber processing apparatus according to an embodiment of the present invention. The processing apparatus includes a plurality of tubular treatment containers 1 that is spatially coupled with one another by means of piping. Each treatment container 1 is piped so as to be able to control and manage an atmosphere individually and in an integrated fashion, and valves 2 for controlling an atmosphere in the treatment containers are provided on a path of piping. A vacuum pump for exhaust 3 is connected to the piping in order to efficiently perform displacement of heavy hydrogen D₂ source and nitrogen N₂ source, and further exhaust gas in the treatment containers via an air source and a flow controller (MFC).

Fig. 2 shows a bobbin 4 accommodated in the accommodation container 1. Optical fiber 5 is wound on the bobbin 4 as shown in Fig. 2. An outside diameter on a cross section perpendicular to an axial direction, in which the optical fiber 5 is wound, in the bobbin 4 is 340 mm.

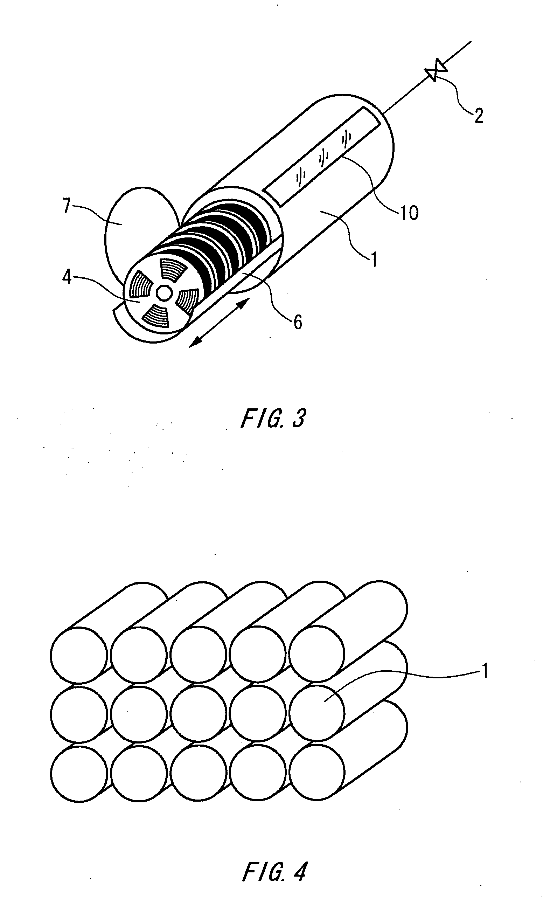

Fig. 3 shows the treatment container 1. The treatment container 1 has a treatment chamber that is made of metal such as stainless steel and is hollow and tubelike. Furthermore, the treatment container 1 has a door 7 for opening or closing the treatment chamber and a tray 6 for holding a plurality of bobbins 4. The bobbins 4 are accommodated in the treatment chamber of the treatment container 1 in a state that the bobbins are put in the tray 6, as shown in Fig. 3, and are taken out and put in the container by opening and closing of the door 7 in the style of sliding. In this case, the treatment container 1 arranges in line and accommodates the plurality of bobbins 4 in an axial direction in which the optical fiber 5 is wound. The treatment container has the magnitude capable of arranging in line and accommodating, e.g., ten bobbins 4 at a maximum. The shape of treatment container 1 has a circular cross section or a polygonal cross section similar to a circle, and thus enables exhaust by a vacuum pump with a relatively small quantity of material and thin wall material, and further minimization of unnecessary space around bobbin 4 as much as possible. The cross section perpendicular to the direction in which the bobbins 4 in the treatment chamber of the treatment container 1 are arranged is the substantially same magnitude as that of the cross section perpendicular to that direction in the bobbins 4. For example, when an outside diameter of the bobbin 4 is 340 mm, an inside diameter of a cross section of a treatment chamber is 400 mm. Furthermore, when a plurality of treatment containers 1 that can accommodate several units therein is provided and coupled by piping, since the present processing apparatus has the same effect using small volume as compared with a conventional large-scale box-type processing apparatus that can process the same number of bobbins 4, it is possible to shorten time required to supply and exhaust air and extremely reduce the use of expensive heavy hydrogen. Particularly, when the number of bobbins 4 is small, since only the treatment containers of the desired number can be handled by the operation of the valves, it is possible to process optical fiber effectively.

Moreover, as shown in Fig. 3, the treatment container 1 may have a transparent window 10 through which it can be watched from the outside whether the bobbins 4 are accommodated in the treatment chamber. In this case, the window 10 uses, e.g., a glass plate. The window 10 may further be provided in the direction in which the bobbins 4 in the treatment container 1 are arranged lengthwise. In addition, a point at which the window 10 is provided is not limited to this, it may be provide in the door 7. In this way, it is possible to know whether the bobbins 4 are accommodated in the treatment chamber of the treatment container 1 without opening or closing the door 7 in the treatment container 1. Therefore, it is possible to prevent the treatment container 1 in which the bobbins 4 are not accommodated from being unnecessarily exhausted or supplied with treatment gas.

In addition, the door 7, the valve 2, the flow controller (MFC), and the vacuum pump for exhaust 3 in the treatment container 1. are controlled and managed in an integrated fashion by means of a control unit not shown, in order to perform a gas treatment. In this manner, since a state of each treatment container is controlled and managed in an integrated fashion, there are performed, without fail, elapsed time for treatment in each treatment container, an atmosphere in the treatment container, opening and closing of the treatment container, disconnecting and connecting of each treatment container from/to a gas supply and exhaust system, and so on.

Fig. 4 is a schematic perspective diagram showing an arrangement example of 15 treatment containers 1. These 15 treatment containers 1 can have a treatment container configuration according to an amount of fiber to be processed, by using these treatment containers individually or using some containers in combination with one another.

Moreover, the optical fiber processing apparatus may include a mass meter for measuring mass of the treatment container 1 in place of the window 10 or in addition to the window 10 shown in Fig. 3. This mass meter is an example of a detecting section in the present invention. In this case, there is provided a threshold value between mass when the bobbins 4 on which the optical fiber 5 is wound are not accommodated in the treatment chamber of the treatment container 1 and mass when the bobbins are accommodated, and the mass meter detects that the bobbins 4 on which the optical fiber 5 is wound are not accommodated in the treatment container 1 when mass shown by the mass meter is smaller than this threshold value. When it is detected that the bobbins are not accommodated, the optical fiber processing apparatus may display that effect on a display or the like. Moreover, in that case, the optical fiber processing apparatus may prohibit the operation of valve 2 of the treatment container 1 for which that effect has been detected. In this way, it is possible to know whether the bobbins are accommodated in the treatment chamber of the treatment container 1 without opening or closing the door 7 of the treatment container 1. Therefore, it is possible to prevent the treatment container 1 in which the bobbins 4 are not accommodated from being unnecessarily exhausted or being supplied with treatment gas.

When processing optical fiber using gas, e.g., under an atmosphere including heavy hydrogen of 1% at normal temperature and pressure, the treatment of optical fiber requires three and half days. However, since the optical fiber is drawn and accumulated for this period, it is preferable that the heavy hydrogen treatment of the optical fiber is performed in parallel with the drawing. When using the processing apparatus according to the present invention in such a situation, some treatment containers are filled with an atmosphere containing heavy hydrogen and is under a processed state, and other treatment containers takes out and puts in the optical fiber, exhausts treatment gas, and introduces gas. In this way, gas treatments in various process steps are performed in parallel.

Although the present invention has been described by way of an exemplary embodiment, it should be understood that those skilled in the art might make many changes and substitutions without departing from the spirit and the scope of the present invention. It is obvious from the definition of the appended claims that embodiments with such modifications also belong to the scope of the present invention.

### INDUSTRIAL APPLICABILITY

An optical fiber processing apparatus and a process method of the present invention can apply optical fiber to various gas treatments in a state that the optical fiber is wound on a bobbin, in addition to a gas treatment performed to improve a hydrogen-resistant characteristic of the optical fiber.

## Claims

1. An optical fiber processing apparatus comprising a plurality of containers for processing optical fiber that are spatially coupled by piping, each treatment container comprising a treatment chamber that can be sealed and accommodate one or more bobbins on which fiber to be processed is wound, wherein the treatment chamber is supplied with treatment gas, and the optical fiber is processed by the gas.

2. The optical fiber processing apparatus as claimed in claim 1, wherein the treatment gas is gas including heavy hydrogen.

3. The optical fiber processing apparatus as claimed in claim 1, wherein the treatment gas is heavy hydrogen.

4. The optical fiber processing apparatus as claimed in any one of claims 1 to 3, wherein the treatment container has a tubelike door of which one end can be opened or closed.

5. The optical fiber processing apparatus as claimed in any one of claims 1 to 4, wherein a cross sectional shape of the treatment container has a circle or a shape similar to the circle.

6. The optical fiber processing apparatus as claimed in any one of claims 1 to 5, wherein the treatment chamber of the treatment container comprises a slidable tray therein.

7. The optical fiber processing apparatus as claimed in any one of claims 1 to 6, wherein the treatment containers are connected to one another by piping to be exhausted by a vacuum pump.

8. The optical fiber processing apparatus as claimed in any one of claims 1 to 7, further comprising valves that are provided in the piping for coupling the plurality of treatment containers, wherein some of the plurality of treatment containers are freely disconnected from or connected to other treatment containers and an air supply and exhaust system by the valves.

9. The optical fiber processing apparatus as claimed in any one of claims 1 to 8, further comprising a system that controls and manages a gas process for the optical fiber in each treatment container in an integrated fashion.

10. The optical fiber processing apparatus as claimed in claim 1, wherein the treatment container arranges and accommodates the plurality of bobbins on a line in the axial direction in which the optical fiber is wound.

11. The optical fiber processing apparatus as claimed in claim 10, wherein a cross section perpendicular to the direction in which the bobbins are arranged has the substantially same magnitude as that of a cross section perpendicular to the direction in the bobbins, in the treatment chamber of the treatment container.

12. The optical fiber processing apparatus as claimed in claim 11, wherein the treatment container has a transparent window through which whether the bobbins are accommodated in the treatment chamber can be comprehended from the outside.

13. The optical fiber processing apparatus as claimed in claim 12, wherein the window is lengthwise arranged in the direction in which the bobbins in the treatment container are arranged.

14. The optical fiber processing apparatus as claimed in claim 1, further comprising a detecting section that detects whether the bobbins are accommodated in the treatment chamber of the treatment container.

15. The optical fiber processing apparatus as claimed in claim 13, wherein the detecting section comprises a mass meter that measures mass of the treatment container.

16. A method for processing optical fiber in which the optical fiber is processed by gas by means of an optical fiber processing apparatus as claimed in any one of claims 1 to 9.
